# EUROPÄISCHE PATENTSCHRIFT

(11) **EP 0 702 892 B1**
(45) Veröffentlichungstag und Bekanntmachung des Hinweises auf die Patenterteilung: **08.03.2000**
(21) Anmeldenummer: 95113360.2
(22) Anmeldetag: 25.08.1995
(51) Int. Cl.: A01F 12/40

(54) **Anbauhäcksler mit Breitverteileraustrag für zu zerkleinerndes Gut, insbesondere Stroh/Spreu-Gemisch für/an einem Mähdrescher**
Wide spreading chopper-attachment for material to cut up, especially chaff/straw of a combine
Accessoire hacheur à large épandage pour matière à hacher en particulier le mélange de balles et de menues pailles d'une moissoneuse-batteuse

(30) Priorität: 07.09.1994 DE 4431802
(43) Veröffentlichungstag der Anmeldung: 27.03.1996
(73) Patentinhaber: CLAAS KGaA, 33428 Harsewinkel (DE)
(72) Erfinder: Roberg, Alfons, D-33428 Harsewinkel (DE)
(74) Vertreter: Hanewinkel, Lorenz, Dipl.-Phys.

(56) Entgegenhaltungen:
- EP-A- 0 331 784
- EP-A- 0 538 599
- EP-A- 0 631 717
- DE-A- 3 615 151
- DE-B- 1 079 878
- DE-C- 862 383
- DE-C- 3 529 801
- GB-A- 2 201 075
- US-A- 2 848 238
- US-A- 2 932 145
- US-A- 3 370 722

## Beschreibung

Die Erfindung bezieht sich auf einen Anbauhäcksler mit Breitverteileraustrag für zu zerkleinerndes Gut, insbesondere Stroh/Spreu-Gemisch für/an einem Mähdrescher, gemäß Oberbegriff des Patentanspruches 1.

Ein derartiger Anbauhäcksler ist aus der US-PS 2,932,145 bekannt geworden, bei dem unterhalb einer Häckselwalze ein Übergabetrichter und darunter ein Rotorgehäuse mit Auswurfstutzen angeordnet ist. In dem Rotorgehäuse, welches gleichzeitig einen Exhauster bildet, sind Schneidmesser angeordnet. Das Rotorgehäuse ist jedoch durch Schweißen fest unter dem Trichter angebracht, so daß der Auswurfstutzen für eine verstellbare Breitverteilung nicht verändert werden kann.

Weiterhin ist aus der DE-PS 36 15 151 unterhalb eines Häckslers ein Auswurfgebläse mit fest angebrachten Auswurfstutzen bekannt, so daß das zerkleinerte Gut nur in einer bestimmten Breite ausgeworfen werden kann und keine Seiteneinstellung möglich ist.

Die DE-PS 35 29 801 zeigt ebenfalls eine Vorrichtung für Mähdrescher zum Verteilen der Spreu, und zum Auswurf des zerkleinerten Gutes, insbesondere Stroh, wobei in einem Trichter ein Häcksler angeordnet ist, der das Gut zerkleinert und einem fest angeschlossenen Auswurfstutzen zuführt, so daß auch hier keine Seiteneinstellung in der Breitverteilung möglich ist.

Schließlich offenbart die DE-PS 1 071 403 einen Häcksler mit zugeordnetem Gebläsestutzen, der ebenfalls fest ist und somit auch nur eine Breitverteilung auf vorbestimmter Weise durchführt.

Diese bekannten Vorrichtungen sind verhältnismäßig aufwendig ausgeführt und in dem Breitenverteileraustrag unzureichend.

Aufgabe der Erfindung ist es, einem nach dem Oberbegriff des Patentanspruches 1 aufgebautem Anbauhäcksler derart zu verbessern, daß die Gutzerkleinerung und der Gutaustrag und die Breitverteilung in einfacher Weise integriert sind, so daß der Aufbau kompakter und einfacher bei optimaler Funktion ist.

Diese Aufgabe wird erfindungsgemäß durch die kennzeichnenden Merkmale des Patentanspruches 1 gelöst.

Die sich an diesen Patentanspruch 1 anschließenden Unteransprüche beinhalten Gestaltungsmerkmale, welche vorteilhafte und förderliche Weiterbildungen der Aufgabenlösung darstellen.

Bei dem Anbauhäcksler gemäß der Erfindung ist die Häckseleinrichtung und die Austrageinrichtung in eine einzige Werkzeugeinheit integriert, und diese Werkzeugeinheit ist in dem Rotorgehäuse angeordnet. Somit kann auf den bisher üblichen, oberhalb des Übergabetrichters in der Ausfallhaube angeordneten Häcksler verzichtet werden.

Die Werkzeugeinheit bildet eine Schneid- und Wurfeinrichtung, so daß das in das Rotorgehäuse hineinfallende Stroh/SpreuGemisch einerseits zerkleinert (gehäckselt) und gleichzeitig in Richtung Auswurfstutzen gefördert wird. Weiterhin ist in vorteilhafter Weise das Rotorgehäuse unter dem Übergabetrichter seitenverschwenkbar mittels eines Drehkranzes gelagert, wodurch der an das Rotorgehäuse angeschlossene Auswurfstutzen in einem gewünschten Winkelbereich seitenverstellt werden kann und dadurch die gewünschte Auswurfbreite für das zerkleinerte Gut wahlweise eingestellt werden kann.

Durch die gleichzeitig häckselnde und austragende Einrichtung im Rotorgehäuse ist der Anbauhäcklser im Aufbau und in der Herstellung vereinfacht und kostengünstiger geworden und hat eine kompakte Bauweise. Durch die Integration der drei Funktionen - Zerkleinern, Austragen und Breiteneinstellung - hat dieser Anbauhäcksler eine optimale Funktion erreicht.

Es ist bevorzugt, unter der Ausfallhaube zwei Trichter mit je einem drehbar darunter gelagerten Rotorgehäuse und jeweils einer darin rotierenden Schneid- und Wurfeinrichtung anzuordnen, wobei die beiden Rotorgehäuse für die Einstellung des Breitverteileraustrages in der Seitenverschwenkung gekoppelt sind.

Auf den Zeichnungen ist ein Ausführungsbeispiel gemäß der Erfindung dargestellt, welches nachfolgend näher erläutert wird. Es zeigt:
- Fig. 1: eine schematische Seitenansicht eines Mähdreschers mit Anbauhäcksler, welcher einen Übergabetrichter mit Förderschnecke, ein darunter seitenverschwenkbar gelagertes Rotorgehäuse mit Schneid- und Wurfbaueinheit und Auswurfstutzen,
- Fig. 2: eine Draufsicht auf den Übergabetrichter mit darin angeordneter horizontaler Förderschnecke und darunter angeordnetem Rotorgehäuse,
- Fig. 3: eine Rückansicht des unter einem Schüttler angeordneten Übergabetrichters mit schrägen Zuführketten und darunter liegendem Rotorgehäuse,
- Fig. 4: eine Draufsicht auf zwei seitenverschwenkbar miteinander gekoppelte Rotorgehäuse mit je einer Schneid- und Wurfbaueinheit und in strichpunktierten Linien angedeuteten Übergabetrichtern,
- Fig. 5: eine perspektivische Ausschnittdarstellung des Rotorgehäuses mit Schneid- und Wurfbaueinheit.

Der Anbauhäcksler mit Breitverteileraustrag für zu zerkleinerndes Gut, insbesondere Stroh/Spreu-Gemisch, für /an einem Mähdrescher (1) weist mindestens einen an der Ausfallhaube (2) des Mähdreschers (1) festlegbaren Übergabetrichter (3) für das Gut und ein darunter angeordnetes topfförmiges Rotorgehäuse (4) mit Schneid- oder Wurforganen und einen angeschlossenen Auswurfstutzen (5) auf.

Das topfförmige Rotorgehäuse (4) lagert um eine vertikale Schwenkachse (6) hin- und herschwenkbar unter dem Übergabetrichter (3) und im topfförmigen Rotorgehäuse (4) ist eine um eine koaxial zur Schwenkachse (6) verlaufende Achse (7) rotierende, das Gut zerkleinernde und gleichzeitig ausfördernde Werkzeugeinheit (8) angeordnet, welche als Schneid- und Wurfeinrichtung ausgebildet ist.

Der Anbauhäcksler kann nur einen Übergabetrichter (3) mit Rotorgehäuse (4) und Werkzeugeinheit (8) haben, jedoch sind in bevorzugter Weise an der Ausfallhaube (2) untenseitig zwei im Abstand nebeneinander quer zur Mähdrescher-Fahrtrichtung (F) angeordnete Übergabetrichter (3) angesetzt, unter denen jeweils ein topfförmiges Rotorgehäuse (4) mit darin rotierender Werkzeugeinheit (8) und daran angeschlossenem Auswurfstutzen (5) beweglich lagert.

Beiden Rotorgehäusen (4) sind durch ein Bewegungsorgan (9), wie doppelseitig beaufschlagbaren Druckmittelzylinder, Stellmotor und Hebelgestänge oder Umschlingungstrieb, in der axialen Seitenverschwenkung (Schwenkwinkel) ihrer Auswurfstutzen (5) miteinander gekoppelt.

Jedes Rotorgehäuse (4) ist mit einem Drehkranz (10) unter dem Übergabetrichter (3) verschwenkbar gelagert.

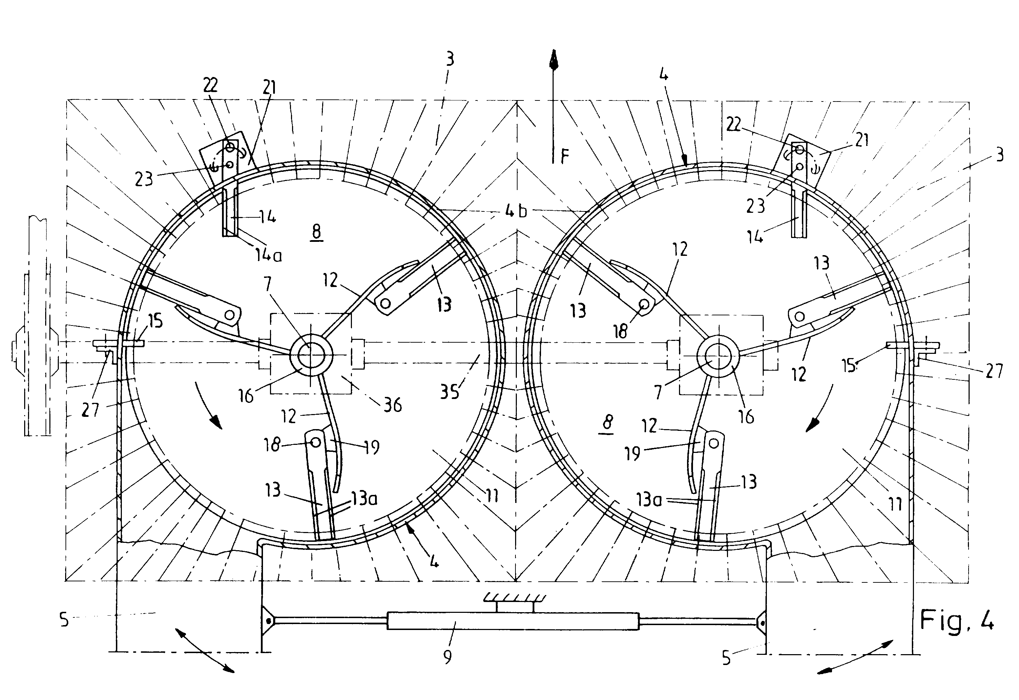

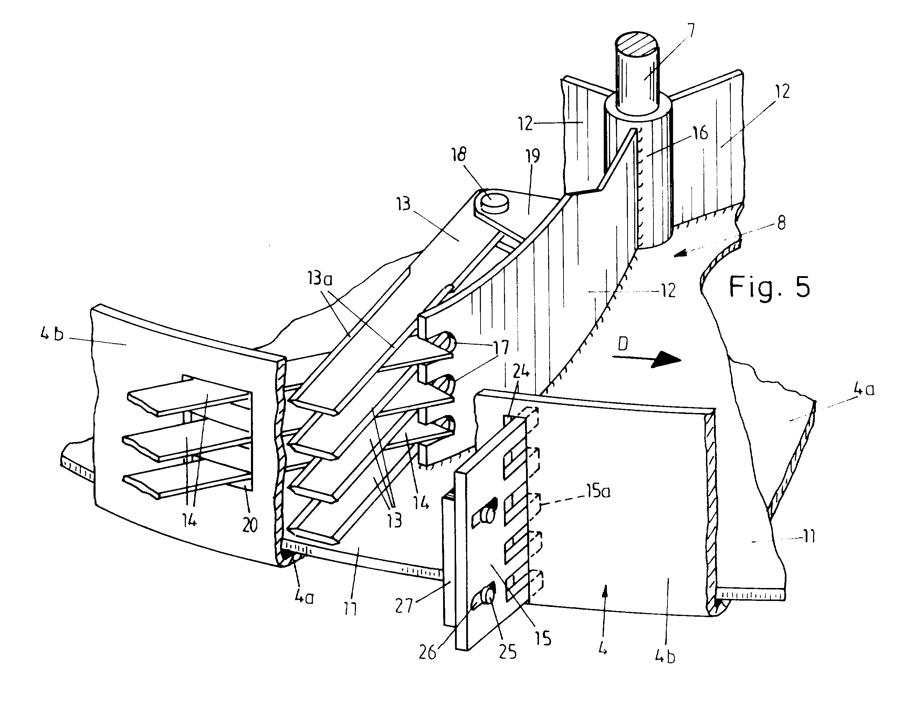

Die in Fig. 4 und 5 deutlich dargestellte Schneid- und Wurfeinrichtung (8) weist eine über dem Topfboden (4a) des Rotorgehäuses (4) liegende, um die vertikale Achse (7) drehbare Drehscheibe (Drehteller) (11) auf.

Auf der in sich ebenen Drehscheibe (11) sind mehrere von der Achse (7) radial nach außen abgehende Schläger (12) befestigt, und an jedem Schläger (11) sind mehrere übereinander angeordnete, frei beweglich pendelnde Schlegel (13) mit Schneidkanten (13a) angelenkt.

An dem Topfmantel (4b) des Rotorgehäuses (4) ist mindestens ein Satz an übereinander angeordneter, in das Rotorgehäuse (4) hineinragender und mit den Schlegeln (13) zusammenwirkender Gegenmesser (14) verstellbar gehalten. Weiterhin ist an dem Topfmantel (4b) mindestens ein in das Rotorgehäuse (4) hineinragender und mit den Schlegeln (13) zusammenwirkender Schneidkamm (15) verstellbar angeordnet.

Die Schläger (12) sind von flachen, hochkantstehend angeordneten, auf der Drehscheibe (11) und an einer zentralen, um die vertikale Achse (7) drehbaren Lagerbuchse (16) der Drehscheibe (11) durch Schweißen od. dgl. befestigten Leisten gebildet. Die Schläger (12) haben in Längsrichtung eine entgegen der Drehrichtung (D) leicht gekrümmte Form und enden mit ihrem freien Längenende im Abstand zum Topfmantel (4b); in ihrem freien Ende zeigen die Schläger (12) im Abstand übereinanderliegende Eintauchaussparungen (17) für die Gegenmesser (14).

Die Schlegel (13) sind von flachen, flachliegend angeordneten Messerleisten mit den beiden Längskanten vom freien Längenende her bis im Abstand zur Anlenkung an den Schlägern (12) verlaufenden Schneidkanten (13a) gebildet und durch je eine vertikale Gelenkachse (18) an der in Drehrichtung (D) rückwärtigen Schlägerseite in Lagerlaschen (19) beweglich gehalten.

Die Gegenmesser (14) sind von flachen, flachliegend angeordneten und durch einen Ausschnitt (20) im Topfmantel (4b) in das Rotorgehäuse (4) hineinragenden Messerleisten mit an beiden Längskanten vorgesehenen Schneidkanten (14a) gebildet und dabei mit ihrem aus dem Topfmantel (4b) herausragenden Längenende an am Topfmantel (4b) außenseitig befestigten Lagerlaschen (21) durch Schrauben (22) und Löcher oder Langlöcher stufenweise oder stufenlos um eine vertikale Schwenkachse (23) in und entgegen der Schläger-Rotationsrichtung winkeleinstellbar (Fig. 4).

Der Schneidkamm (15) ist hochkantstehend angeordnet, ragt mit seinem gezahnten Ende (15a) durch einen Ausschnitt (24) im Topfmantel (4b) in das Rotorgehäuse (4) hinein und ist durch Schrauben (25) und Langlöcher (26) an einem an der Außenseite des Topfmantels (4b) befestigten Lagersteg (27) in Radialrichtung verstellbar gehalten.

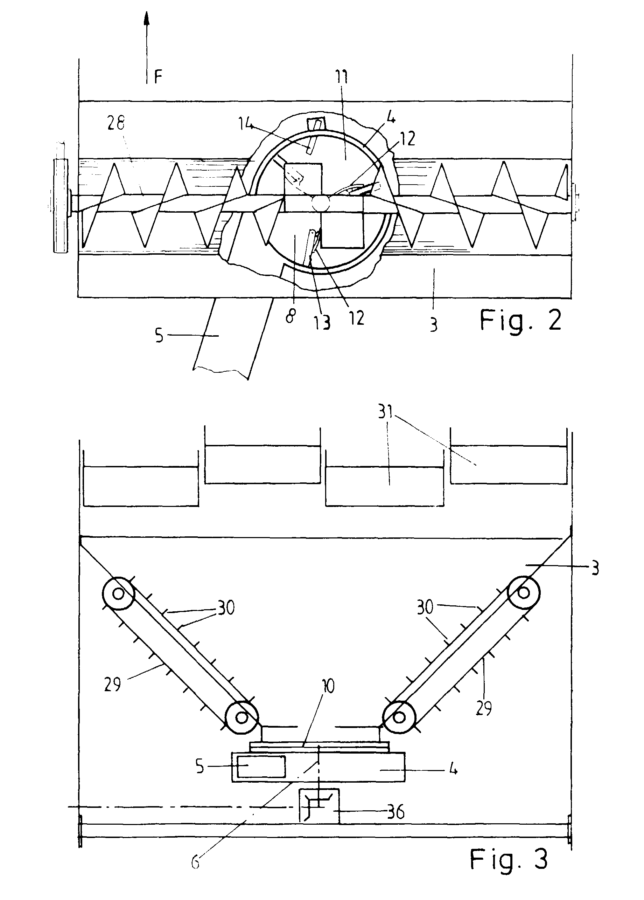

Im Übergabetrichter (3) lagert eine gegenläufig aufeinanderzu wirkende Schneckengänge aufweisende, das zu zerkleinernde Gut von beiden Mähdrescher-Breitseiten her dem Rotorgehäuse (4) zuführende, horizontal liegende Förderschnecke (28) - Fig. 2 -.

Bei einer weiteren Ausführung nach Fig. 3 sind im Übergabetrichter (3) zwei sich gegenüberliegende, entsprechend der Trichterneigung schräg verlaufende, endlos umlaufende Zuführketten, -bänder o.dgl. (29) mit Mitnehmern (30) zum Zuführen des zu verkleinernden Gutes in das Rotorgehäuse (4) angeordnet.

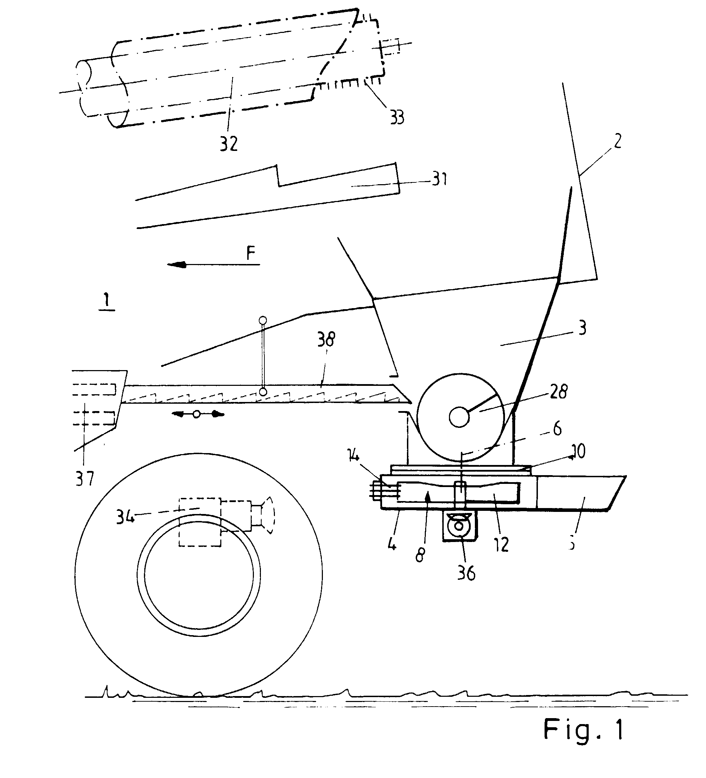

Der Übergabetrichter (3) ist unterhalb eines Schüttlers (31) oder einer Axial-Trenneinrichtung (32) - Rotor - mit mindestens an deren Austrittsende vorgesehenem Messersatz (33) zur Vorzerkleinerung des Gutes angeordnet. Die rotierende Trenneinrichtung (32) ist in Fig. 1 in strichpunktierten Linien dargestellt.

In bevorzugter Weise weist jede Werkzeugeinheit (8) drei in gleichem Radialabstand zueinander auf der Drehscheibe (11) festgelegte Schläger (12) auf, die bei der Rotation auf der Drehscheibe (12) auffallende Gut im Rotorgehäuse (4) bewegen und in Richtung Auswurfstutzen (5) fördern. Bei dieser Rotation wirken die frei pendelnden Schlegel (13) mit den Gegenmessern (14) zusammen und zerschneiden das durch die Rotation gegen den Topfmantel (4b) geschleuderte Gut. Der Schneidkamm (15) ergibt eine gewisse Rückhaltewirkung auf das Gut, was dann von den ebenfalls mit dem Schneidkamm (15) zusammenwirkenden Schlegeln (13) weiter zerkleinert und danach durch die Schläger (12) und Schlegel (13) durch den Auswurfstutzen (5) ausgeworfen wird.

Es erfolgt also im Rotorgehäuse (4) eine Guthäckselung und ein Gutauswerfen durch eine einzige Werkzeugeinheit (8); die Auswurfrichtung wird durch den winkelverstellbaren Auswurfstutzen (5) aufgrund der drehbaren Lagerung des Rotorgehäuses (4) unter dem Trichter (3) bestimmt.

Bei der Anordnung von zwei Rotorgehäusen (4) führen die beiden Werkzeugeinheiten (8) gegenläufige Rotationen aus (Fig. 4).

Der Antrieb des oder der Werkzeugeinheiten (8) erfolgt von einem gemeinsamen Antrieb (34) über eine Welle (35) auf ein Getriebe (36) und von diesem auf die Lagerhülse (16) und Drehachse (7) der Drehscheibe (11).

Ein vom Siebkasten (37) kommender Eingabeboden (38) gibt Spreugut in den Trichter (3) ab, wie Fig. 1 zeigt.

## Patentansprüche

1. Anbauhäcksler mit Breitverteileraustrag für zu zerkleinerndes Gut, insbesondere Stroh/Spreu-Gemisch, für/an einem Mähdrescher mit mindestens einem an der Ausfallhaube (2) des Mähdreschers festlegbaren Übergabetrichter (3) für das Gut und einem darunter angeordneten topfförmigen Rotorgehäuses (4) mit Schneid- und Wurfeinrichtung (8) und einem angeschlossenen Auswurfstutzen (5), dadurch gekennzeichnet, daß
- die Schneid- und Wurfeinrichtung (8) eine über dem Topfboden (4a) des Rotorgehäuses (4) liegende, um die vertikale Achse (7) drehbare Drehscheibe (11) aufweist,
- auf der Drehscheibe (11) mehrere von der Achse (7) radial nach außen abgehende Schläger (12) befestigt sind,
- an jedem Schläger (12) mehrere übereinander angeordnete, frei beweglich pendelnde Schlegel (13) mit Schneidkanten (13a) angelenkt sind,
und
- an dem Topfmantel (4b) des Rotorgehäuses (4) mindestens ein Satz aus übereinander angeordneten, in das Rotorgehäuse (4) hineinragenden und mit den Schlegeln (13) zusammenwirkenden Gegenmessern (14) verstellbar gehalten sind.

2. Anbauhäcksler nach Anspruch 1, dadurch gekennzeichnet, daß die Schläger (12) von flachen, hochkantstehend angeordneten, auf der Drehscheibe (11) und an einer zentralen Lagerbuchse (16) der Drehscheibe (11) durch Schweißen o. dgl. befestigten Leisten gebildet sind, in Längsrichtung entgegen der Drehrichtung (D) leicht gekrümmt sind, mir ihrem freien Längenende im Abstand zum Topfmantel (4b) enden und in diesem freien Ende mit Abstand übereinanderliegende Eintauchaussparungen (17) für die Gegenmesser (14) aufweisen.

3. Anbauhäcksler nach Anspruch 1 oder 2, dadurch gekennzeichnet, daß die Schlegel (13) von flachen, flachliegend angeordneten Messerleisten mit an beiden Längskanten vom freien Längenende her bis zum Abstand zur Anlenkung an den Schlägern (12) verlaufenden Schneidkanten (13a) gebildet und durch je eine vertikale Gelenkachse (18) an der in Drehrichtung (D) rückwärtigen Schlägerseite in Lagerlaschen (19) beweglich gehalten sind.

4. Anbauhäcksler nach einem der Ansprüche 1 bis 3, dadurch gekennzeichnet, daß die Gegenmesser (14) von flachen, flachliegend angeordneten und durch einen Ausschnitt (20) im Topfmantel (4b) in das Rotorgehäuse (4) hineinragenden Messerleisten gebildet sind und dabei mit ihren aus dem Topfmantel (4b) herausragenden Längenende an am Topfmantel (4b) außenseitig befestigten Lagerlaschen (21) durch Schrauben (22) und Löcher oder Langlöcher stufenweise oder stufenlos um eine vertikale Schwenkachse (23) winkeleinstellbar sind.

5. Anbauhäcksler nach einem der Ansprüche 1 bis 4, dadurch gekennzeichnet, daß an dem Topfmantel (4b) mindestens ein in das Rotorgehäuse (4) hineinragender und mit den Schlegeln (13b) zusammenwirkender Schneidkamm (15) verstellbar angeordnet ist.

6. Anbauhäcksler nach einem der Ansprüche 1 bis 5, dadurch gekennzeichnet, daß der Schneidkamm (15) hochkantstehend angeordnet ist, mit einem gezahnten Ende (15a) durch einen Ausschnitt (24) im Topfmantel (4b) in das Rotorgehäuse (4) hineinragt und durch Schrauben (25) und Langlöcher (26) an einem an der Außenseite des Topfmantels (4b) befestigten Lagersteg (27) in Radialrichtung verstellbar gehalten ist.

7. Anbauhäcksler nach einem der Ansprüche 1 bis 6, dadurch gekennzeichnet, daß im Übergabetrichter (3) eine das zu zerkleinernde Gut von beiden Mähdrescher-Breitseiten her mit gegenläufig wirkenden Schneckengängen dem Rotorgehäuse (4) zuführende, horizontal liegende Förderschnecke (28) angeordnet ist.

8. Anbauhäcksler nach einem der Ansprüche 1 bis 7, dadurch gekennzeichnet, daß im Übergabetrichter (3) zwei sich gegenüberliegende, entsprechend der Trichterneigung endlos umlaufende Zuführketten, -bänder o. dgl. (29) mit Mitnehmern (30) zum Zuführen des zu zerkleinernden Gutes in das Rotorgehäuse (4) angeordnet sind.

## Claims

1. A wide-spreading chopper attachment for material to be chopped, in particular a straw/chaff mixture, for/on a combine with at least one transfer hopper (3) for the material mountable on the discharge hood (2) of the combine, and with a pot-shaped rotor casing (4) arranged beneath that, with a cutting and ejecting device (8) and an ejector connection (5) connected to it, characterized in that
- the cutting and ejecting device (8) has a rotary disk (11) mounted above the pot bottom (4a) of the rotor casing (4) so it can rotate about the vertical axis (7),
- several beaters (12) projecting radially outward from the axis (7) are mounted on the rotary disk (11),
- several freely swinging mallets (13) having cutting edges (13a) are hinge-connected on each beater (12), arranged one above the other, and
- at least one set of opposing blades (14) is arranged one above the other on the pot jacket (4b) of the rotor casing (4) so they project into the rotor casing (4) and are mounted adjustably and work together with the mallets (13).

2. A chopper attachment according to Claim 1, characterized in that the beaters (12) are formed by flat bars arranged on edge, mounted on the rotating disk (11) and on a central bearing bush (16) of the rotating disk (11) by welding or the like, having a slight curvature in the longitudinal direction, curving against the direction of rotation (D), ending with their free longitudinal end at a distance from the pot jacket (4b), and they have immersion recesses (17) for the opposing blades (14) arranged one above the other with a spacing between them on this free end.

3. A chopper attachment according to Claim 1 or 2, characterized in that the mallets (13) are formed by flat blade strips arranged to lie flatly with cutting edges (13a) on both longitudinal edges, running from the free longitudinal end to a distance from the hinge connection to the beaters (12), and each held movably in bearing straps (19) by a vertical articulated axle (18) on the side of the beater at the rear in the direction of rotation (D).

4. A chopper attachment according to one of Claims 1 through 3, characterized in that the opposing blades (14) are formed by flat blade strips which lie flatly and project into the rotor casing (4) through a cutout (20) in the pot jacket (4b), and their angular position is adjustable either continuously or in steps about a vertical pivot axis (23) by means of screws (22) and holes or slots on the bearing strips (21) mounted on the outside of the pot jacket (4b) with their longitudinal end projecting out of the pot jacket (4b).

5. A chopper attachment according to one of Claims 1 through 4, characterized in that at least one cutting comb (15) that works together with the mallets (13b) is mounted adjustably on the pot jacket (4b) and projects into the rotor casing (4).

6. A chopper attachment according to one of Claims 1 through 5, characterized in that the cutting comb (15) is arranged on edge, with a toothed end (15a) projecting into the rotor casing (4) through a cutout (24) in the pot jacket (4b) and is mounted adjustably in the radial direction by screws (25) and slots (26) on a bearing web (27) mounted on the outside of the pot jacket (4b).

7. A chopper attachment according to one of Claims 1 through 6, characterized in that a horizontally mounted feed screw (28) is arranged in the transfer hopper (3) to feed the material to be chopped from both wide sides of the combine to the rotor casing (4) with contra-rotating screw channels.

8. A chopper attachment according to one of Claims 1 through 7, characterized in that two opposing, continuously revolving feed chains, belts or the like (29) with pushers (30) are arranged in the transfer hopper (3) according to the inclination of the hopper for feeding the material to be chopped into the rotor casing (4).

## Revendications

1. Accessoire hacheur à large épandage pour matières à hacher, en particulier un mélange de balles et de menues pailles, à assembler dans ou à atteler à une moissonneuse-batteuse, comprenant au moins une trémie de transfert (3) des matières pouvant être raccordée à la hotte d'éjection (2) de la moissonneuse-batteuse, et un carter de rotor (4) en forme de pot, agencé sous cette trémie, avec dispositif de coupe et d'éjection (8), et une tubulure d'éjection (5) qui lui est raccordée, caractérisé en ce que:
- le dispositif de coupe et d'éjection (8) présente un disque rotatif (11) agencé au dessus du fond (4a) du carter de rotor (4) et tournant autour de l'axe vertical (7),
- plusieurs battes (12) en saillie sur l'axe (7), radialement vers l'extérieur, sont fixées au disque rotatif (11),
- plusieurs fléaux (13) disposés les uns au-dessus des autres et oscillant librement, équipés d'arêtes de coupe (13a), sont articulés à chacune des battes (12), et
- au moins un ensemble orientable de contre-lames (14) superposées, s'avançant dans le carter de rotor (4) et ayant un effet concourant avec les fléaux (13) est assemblé à la paroi périphérique (4b) du carter de rotor (4).

2. Accessoire hacheur selon la revendication 1, caractérisé en ce que les battes (12) sont formées par des lattes plates, fixées de chant, par soudage ou procédé similaire, sur le disque rotatif (11) et à un coussinet-douille (16) central du disque rotatif (11), en ce que dans le sens de la longueur, elles ont une forme légèrement incurvée dans la direction opposée à la rotation (D) et se terminent avec leur extrémité longitudinale libre à distance de la paroi périphérique (4b), et en ce que dans cette extrémité longitudinale libre, elles présentent des découpures (17) ménagées à distance les unes au dessus des autres, dans lesquelles viennent s'engager les contre-lames (14).

3. Accessoire hacheur selon la revendication 1 ou 2, caractérisé en ce que les fléaux (13) sont constitués par des réglettes de couteau plates, posées à plat, présentant, sur les deux bords longitudinaux, des arêtes de coupe (13a) qui s'étendent de l'extrémité longitudinale libre jusqu'à distance du point d'articulation aux battes (12), et en ce qu'ils sont retenus en pouvant bouger dans des pattes d'assemblage (19) grâce à un axe d'articulation vertical (18) du côté situé dans le sens de rotation (D) à l'arrière des battes.

4. Accessoire hacheur selon l'une des revendications 1 à 3, caractérisé en ce que les contre-lames (14) sont formées par des réglettes de couteaux plates, posées à plat et s'avançant dans le carter de rotor (4) au-travers d'une découpure (20) ménagée dans la paroi périphérique (4b), et qui sont ainsi réglables angulairement, (fig. 4), de manière graduelle ou progressive, autour d'un axe de pivotement vertical (23) dans le sens de la rotation des battes et dans le sens contraire, grâce à des vis (22) et des trous ou des boutonnières, avec leur extrémité longitudinale dépassant de la paroi périphérique (4b), au niveau de pattes d'assemblage (21) fixées extérieurement à la paroi périphérique (4b).

5. Accessoire hacheur selon l'une des revendications 1 à 4, caractérisé en ce qu'au moins un peigne de coupe (15) s'avançant dans le carter de rotor (4) et coopérant avec les fléaux (13b) est assemblé à la paroi périphérique (4b) en pouvant être orienté.

6. Accessoire hacheur selon l'une des revendications 1 à 5, caractérisé en ce que le peigne de coupe (15) est disposé de chant, qu'il fait saillie avec son extrémité dentée (15a) dans le carter de rotor (4), au travers d'une découpure (24) pratiquée dans la paroi périphérique (4b), et est retenu en pouvant être orienté dans le sens radial, par des vis (25) et des boutonnières (26) sur une tringle d'assemblage (27) fixée à la face extérieure de la paroi périphérique (4b).

7. Accessoire hacheur selon l'une des revendications 1 à 6, caractérisé en ce qu'une une hélice transporteuse à vis sans fin (28) agencée horizontalement, qui présente des spires agissant les unes contre les autres en sens contraire, qui achemine les matières à hacher au carter de rotor (4), depuis les deux côtés de la largeur de la moissonneuse-batteuse, est assemblée dans la trémie de transfert (3).

8. Accessoire hacheur selon l'une des revendications 1 à 7, caractérisé en ce qu'on a prévu dans la trémie de transfert (3) deux chaînes ou bandes d'alimentation (29) ou similaires sa faisant face, tournant en continu et inclinées d'oblique conformément à l'inclinaison de la trémie, équipées de taquets d'entraînement (30), pour amener les matières à hacher dans le carter de rotor (4).
